# EUROPÄISCHE PATENTSCHRIFT

(11) **EP 3 598 883 B1**
(45) Veröffentlichungstag und Bekanntmachung des Hinweises auf die Patenterteilung: **18.11.2020**
(21) Anmeldenummer: 19171103.5
(22) Anmeldetag: 25.04.2019
(51) Int. Cl.: A01D 34/73

(54) **WERKZEUGANORDNUNG FÜR DIE MONTAGE AN EINER LANDMASCHINE, LANDMASCHINE SOWIE VERFAHREN ZUM BETREIBEN EINER SOLCHEN**
TOOL ASSEMBLY FOR MOUNTING ON AN AGRICULTURAL MACHINE, AGRICULTURAL MACHINE AND METHOD FOR OPERATING SAME
DISPOSITIF OUTIL POUR LE MONTAGE SUR UNE MACHINE AGRICOLE, MACHINE AGRICOLE AINSI QUE PROCÉDÉ DE FONCTIONNEMENT D'UNE TELLE MACHINE AGRICOLE

(30) Priorität: 26.07.2018 DE 102018118134
(43) Veröffentlichungstag der Anmeldung: 29.01.2020
(73) Patentinhaber: Frank Walz- und Schmiedetechnik GmbH, 35116 Hatzfeld/Eder (DE)
(72) Erfinder: Grote, Frank, 35037 Marburg (DE); Zimmermann, Stefan, 35037 Marburg (DE)
(74) Vertreter: Paul & Albrecht Patentanwälte PartG mbB

(56) Entgegenhaltungen:
- EP-A1- 3 327 205
- DE-A1- 19 521 067
- US-A1- 2013 270 890
- US-A1- 2016 237 657

## Beschreibung

Die Erfindung betrifft eine Werkzeuganordnung zur Montage an einer Landmaschine, insbesondere zur Grünland- und/oder Bodenbearbeitung und/oder zum Ernten, mit einem Werkzeug, das zwischen zwei miteinander verspannten Bauteilen der Werkzeuganordnung gehalten ist. Darüber hinaus betrifft die Erfindung eine Landmaschine sowie ein Verfahren zum Betreiben einer solchen.

Im Grünland- sowie im Bodenbearbeitungs- und Ernte-Bereich kommen Maschinen zum Einsatz, die insbesondere der Bearbeitung von Grünland- oder Ernte-Gütern bzw. dem Boden dienen. Als Beispiele für Landmaschinen seien Mähmaschine, insbesondere Scheibenmäher, Mähdrescher sowie Pflüge, Grubber, Eggen, Fräsen, Häcksler, Mulcher und Ernte-, Dünge- und Sämaschinen genannt.

Landmaschinen tragen in der Regel eine Mehrzahl von Werkzeugen, die insbesondere unmittelbar mit dem zu be- bzw. verarbeitenden Grünland- und/oder Ernte-Gut bzw. dem Boden in Kontakt kommen. Bei diesen handelt es sich beispielsweise um Klingen bzw. Schneiden, Schare oder Scharspitzen, Grubber, Zinken, Heber, insbesondere Ährenheber, oder auch Gleitkufen. Die Werkzeuge sind in der Regel jeweils an einem Werkzeughalter angeordnet und zu ihrer Fixierung mit dem Werkzeughalter unter Beaufschlagung einer Spannkraft verspannt.

Als Beispiel für auf diese Weise gehaltene Werkzeuge seien die zwei oder mehr Schneiden einer Mähscheibenanordnung für einen Scheibenmäher genannt. Eine solche Anordnung, die beispielsweise aus der DE 195 21 067 A1 hervorgeht, umfasst eine auch als Mähscheibe bezeichnete Scheibe, die an einem Grundkörper rotierend antreibbar gehalten ist. Unterhalb der Mähscheibe erstrecken sich zwei längliche, federnde Klingenträger, die an ihrem einen Ende an der Mähscheibe fixiert sind und deren anderes, freies Ende gegen die Mähscheibe bzw. eine oder mehrere zwischen dem Klingenträger und der Mähscheibe liegende weitere Komponenten drückt und die jeweils eine Klinge tragen. Die beiden federnden Klingenträger weisen an ihren freien, radial nach außen weisenden Enden jeweils einen Fixierbolzen auf, der sich durch eine in der getragenen Klinge vorgesehene Durchgangsbohrung erstreckt. Alternativ dazu, dass zwei Klingenträger vorgesehen sind, kann auch ein einteiliger Klingenträger mit zwei Armen zum Einsatz kommen.

Durch die aus der DE 195 21 067 A1 vorbekannte Anordnung wird ein besonders einfacher und schneller Wechsel von verschlissenen bzw. beschädigten Klingen möglich. Konkret braucht dafür nur der jeweilige Klingenträger bzw. Arm dieses nach unten gedrückt, die Klinge entnommen und eine neue Klinge eingesetzt zu werden.

Des Weiteren ist aus der US 2013/0270890 A1 eine Werkzeuganordnung mit zumindest einem an einem Aufnahmeelement gehaltenen Werkzeug, welchem eine Sensoreinrichtung zugeordnet ist, bekannt. Dabei ist die Sensoreinrichtung innerhalb eines Bohrlochs des Werkzeugkörpers angeordnet und dazu ausgebildet, dynamische Werte, wie beispielsweise die im Betrieb auf das Werkzeug ausgeübte Kraft, zu messen.

Die Anmelderin hat festgestellt, dass dem großen Vorteil der Möglichkeit eines besonders schnellen und komfortablen Klingenwechsels der erhebliche Nachteil gegenübersteht, dass es insbesondere verschleiß- bzw. abnutzungsbedingt und/oder aufgrund von unsachgemäßer Montage, etwa einem (wiederholten) zu weiten nach unten drücken eines Klingenträgers oder Arms eines solchen, dazu kommen kann, dass sich die Klingen lösen. Dies stellt eine erhebliches Sicherheitsrisiko dar, da die Mähscheiben im Betrieb der Landmaschine mit hohen Geschwindigkeiten rotiert werden und sich lösende Klingen unkontrolliert und - wie die Anmelderin festgestellt hat - mitunter sehr weit fliegen und auftreffende Klingen Menschen und Tiere in der Umgebung verletzen und/oder Maschinen beschädigen können. Geht eine Klin-ge verloren, kann eine Maschine in der Regel auch nicht mehr korrekt arbeiten.

Ausgehend von dem Stand der Technik ist es daher eine Aufgabe der vorliegenden Erfindung, eine Werkzeuganordnung für eine Landmaschine der eingangs genannten Art anzugeben, die einen schnellen Werkzeugwechsel bei gleichzeitig hoher Betriebssicherheit ermöglicht.

Diese Aufgabe wird bei einer Werkzeuganordnung der eingangs genannten Art dadurch gelöst, dass dem wenigstens einen Werkzeug eine Sensoreinrichtung zugeordnet ist, die derart ausgebildet und angeordnet ist, dass mittels dieser eine Kraft, über die die beiden Bauteile verspannt sind, und/oder eine diese Kraft repräsentierende Größe messtechnisch erfassbar ist oder erfasst wird.

Der Grundgedanke der vorliegenden Erfindung besteht darin, eine Spannkraft, über die ein Werkzeug einer Werkzeuganordnung für eine Landmaschine fixiert ist, und/oder eine die Spannkraft repräsentierende Größe zu überwachen, so dass eine insbesondere verschleiß- und/oder abnutzungsbedingte und/oder auf unsachgemäße Montage zurückzuführende Abnahme der Spannkraft frühzeitig erkannt werden kann und im Lichte des damit einhergehenden hohen Sicherheitsrisikos rechtzeitig Gegenmaßnahmen getroffen werden können. Hierdurch kann die Betriebssicherheit in erheblichem Maße erhöht werden. Für die Überwachung der Spannkraft und/oder diese repräsentierenden Größe kommt dabei eine dem (jeweiligen) Werkzeug zugeordnete Sensoreinrichtung zum Einsatz, die geeignet ist, die Kraft und/oder eine die Kraft repräsentierende Größe messtechnisch zu erfassen.

In besonders bevorzugter Ausgestaltung ist die erfindungsgemäße Werkzeuganordnung als Mähscheibenanordnung, insbesondere für einen Scheibenmäher, ausgebildet. Dies ist jedoch nicht einschränkend zu verstehen, das heißt, die erfindungsgemäße Werkzeuganordnung kann selbstverständlich auch anders ausgestaltet sein und für eine andere Anwendung als das Mähen zum Einsatz kommen.

Die erfindungsgemäße Werkzeuganordnung kann nur ein Werkzeug umfassen. Selbstverständlich ist es aber auch möglich, dass mehr als ein Werkzeug vorgesehen ist. In diesem Falle kann für nur eines, für mehrere oder auch alle Werkzeuge jeweils eine Sensoreinrichtung zur Erfassung einer Kraft und/oder diese repräsentierenden Größe vorgesehen sein. Entsprechend zeichnet sich eine Ausführungsform der erfindungsgemäßen Werkzeuganordnung dadurch aus, dass mehrere Werkzeuge vorgesehen und (jeweils) zwischen zwei miteinander verspannten Bauteilen der Werkzeuganordnung gehalten sind, und einem oder mehreren, insbesondere jedem Werkzeug eine Sensoreinrichtung zugeordnet ist, die insbesondere derart ausgebildet und angeordnet ist, dass mittels dieser eine Kraft, über die die zwei Bauteile, zwischen denen das oder das jeweilige Werkzeug gehalten ist, verspannt sind, und/oder eine diese Kraft repräsentierende Größe messtechnisch erfassbar ist oder erfasst wird.

Es kann sein, dass mehrere Werkzeuge zwischen den gleichen beiden Bauteile gehalten sind. Selbstverständlich ist es auch möglich, das mehrere Klingen vorgesehen, diese jedoch nicht zwischen den gleichen zwei Bauteilen gehalten sind, sondern sich für je zwei Werkzeuge wenigstens eines der Bauteile, zwischen denen die Werkzeuge gehalten sind, unterscheidet. Beispielsweise kann bei einer Mähscheibenanordnung für jede Klinge ein eigener Klingenträger unterhalb der Scheibe vorgesehen sein und jede Klinge zwischen dem der Klinge zugeordneten Klingenträger und der Scheibe angeordnet sein.

Weiterhin kann vorgesehen sein, dass die oder mehrere oder jede Sensoreinrichtung als Kraftaufnehmer bzw. Kraftsensor ausgebildet ist oder wenigstens einen solchen umfasst. Alternativ oder zusätzlich kann vorgesehen sein, dass die oder mehrere oder jede Sensoreinrichtung durch einen Drucksensor gegeben ist oder einen solchen umfasst. Dann kann beispielsweise ein insbesondere auf eines der beiden Bauteile, zwischen denen wenigstens ein Werkzeug gehalten ist, wirkender Druck, insbesondere als Größe, die eine beaufschlagte Kraft repräsentiert, messtechnisch erfasst werden.

Eine weitere Ausführungsform zeichnet sich dadurch aus, dass die Anordnung einen Grundkörper umfasst, an dem wenigstens zwei Bauteile, zwischen denen wenigstens ein Werkzeug gehalten ist, rotierend antreibbar gehalten sind. Dies ist beispielsweise bevorzugt der Fall, wenn die Werkzeuganordnung als Mähscheibenanordnung für einen Scheibenmäher ausgebildet ist. Ist ein Grundkörper vorgesehen, sind die wenigstens zwei Bauteile, zwischen denen wenigstens ein Werkzeug gehalten ist, bevorzugt an dessen Oberseite rotierend antreibbar gehalten.

Wenigstens ein an dem Werkzeughalter der erfindungsgemäßen Anordnung gehaltenes Werkzeug ist weiterhin bevorzugt als Klinge ausgebildet. Auch ist es möglich, dass für eine Anordnung mit mehreren Werkzeugen gilt, dass sämtliche Werkzeuge als Klingen ausgebildet sind. Im Falle einer Mähscheibenanordnung etwa, können genau zwei bevorzugt jeweils als Klinge ausgebildete Werkzeuge vorgesehen sein.

Für den Fall, dass die erfindungsgemäße Werkzeuganordnung als Mähscheibenanordnung, insbesondere für einen Scheibenmäher, ausgebildet ist, kann eine Scheibe vorgesehen sein, die an dem Grundkörper rotierend antreibbar gehalten ist, und kann wenigstens ein bevorzugt federnder Klingenträger vorgesehen sein, der sich unterhalb der Scheibe erstreckt, wobei der Klingenträger zumindest abschnittsweise gegen die Scheibe oder eine oder mehrere zwischen dem Klingenträger und der Scheibe liegende weitere Komponenten drückt, und wenigstens eine Klinge zwischen der Scheibe und dem Klingenträger gehalten ist, wobei der wenigstens einen Klinge eine Sensoreinrichtung zugeordnet ist, die derart ausgebildet und angeordnet ist, dass mittels dieser eine durch den Klingenträger beaufschlagte Kraft und/oder eine diese repräsentierende Größe messtechnisch erfassbar ist oder erfasst wird. Ein Nachlassen der Spannkraft eines federnden Klingenträgers etwa, welches beispielsweise auf eine Mehrzahl von vorangegangenen Klingenwechseln, bei denen der federnde Klingenträger jeweils nach unten gedrückt wurde, zurückzuführen ist, kann dann messtechnisch erfasst werden und es können Gegenmaßnahmen eingeleitet werden, die verhindern, dass sich im Betrieb, wenn die Scheibe mit den daran gehaltenen Klingen mit hoher Geschwindigkeit rotiert, eine oder mehrere Klingen von der Scheibe lösen. Denkbare Gegenmaßnahmen können beispielsweise darin bestehen, dass ein Klingenträger, dessen Spannkraft abgenommen hat, ausgetauscht wird und/oder dass zusätzliche Sicherungen vorgesehen werden.

Dann kann in weiterer bevorzugter Ausgestaltung vorgesehen sein, dass der Klingenträger zwei Arme aufweist, und zwischen jedem Arm und der Scheibe jeweils eine Klinge gehalten ist, wobei insbesondere jeder Klinge eine Sensoreinrichtung zugeordnet ist, die derart ausgebildet und angeordnet ist, dass mittels dieser eine Kraft, über die der jeweilige Arm mit der Scheibe verspannt ist, erfassbar ist oder erfasst wird.

Eine weitere Ausführungsform zeichnet sich dadurch aus, dass die oder jede Sensoreinrichtung zwischen der Scheibe und dem Klingenträger angeordnet ist. Dies hat sich als besonders geeignete Anordnung für (eine) Sensoreinrichtung(en) zur Erfassung einer beaufschlagten Kraft und/oder diese repräsentierende Größe erwiesen. Besonders bevorzugt steht dann die Sensoreinrichtung oder zumindest eine Komponente dieser mit der Scheibe und dem Klingenträger oder einer an dem Klingenträger fixierten weiteren Komponente in Kontakt.

Weiterhin kann an dem oder jedem Klingenträger und/oder der Scheibe wenigstens ein Fixierbolzen vorgesehen sein, und kann die oder jede Klinge eine Durchgangsbohrung aufweisen, deren Innenkontur insbesondere mit Spiel an die Außenkontur des wenigstens einen Fixierbolzens angepasst ist. Die jeweilige Klinge kann dann auf den Fixierbolzen aufgesetzt werden und zusammen mit einer beaufschlagten Kraft ausreichender Höhe ist ein sicherer Sitz der Klinge(n) erzielt. Ist ein Fixierbolzen an einem Klingenträger und/oder der Scheibe vorgesehen, ragt dieser bevorzugt an einer Seite des Klingenträgers bzw. der Scheibe von diesem bzw. dieser ab. Alternativ oder zusätzlich ist der Fixierbolzen an einem oder nahe eines freien Endes des Klingenträgers oder der Scheibe angeordnet. Ein Fixierbolzen kann ein zu dem Klingenträger bzw. der Scheibe separates Bauteil sein, was dann bevorzugt an dem Klingenträger bzw. der Scheibe befestigt, etwa daran angeschraubt ist. Selbstverständlich ist es auch möglich, dass wenigstens eine Fixierbolzen an den Klingenträger bzw. die Scheibe angeformt ist.

Ist wenigstens ein Werkzeug, insbesondere wenigstens eine Klinge auf einen Fixierbolzen aufgesetzt, ist die Ausgestaltung bevorzugt derart, dass die Klinge nicht mit einem weiteren Bauteil verspannt bzw. nicht zwischen den zwei verspannten Bauteilen eingespannt ist, so dass die Klinge frei um den Fixierbolzen rotieren kann. Dann kann die Klinge bei Kollision mit einem Hindernis ausweichen, insbesondere nach innen wegdrehen. Dies kann beispielsweise dadurch erreicht werden, dass die Länge eines Fixierbolzens, auf welchen ein Werkzeug, etwa eine Klinge, zu dessen Fixierung aufgesetzt ist, die Stärke des Werkzeugs überschreitet.

Weiterhin bevorzugt kann an der Werkezuganordnung wenigstens ein Sendemodul zum kabellosen Senden von Signalen vorgesehen sein, das mit wenigstens einer einem Werkzeug zugeordneten Sensoreinrichtung verbunden ist. Dies macht eine kabellose Übertragung von Signalen einer oder mehrerer Sensoreinrichtung(en) zur Spannkrafterfassung beispielsweise an eine Empfangseinheit, die an einer mit einem oder mehreren erfindungsgemäßen Werkzeuganordnungen ausgestatten Landmaschine vorgesehen ist, möglich. Eine kabellose Übertragung hat sich als besonders geeignet erwiesen, wenn die Werkzeuganordnung eine oder mehrere Komponenten, insbesondere Werkzeug(e) umfasst, die im Betrieb bewegt, etwa rotiert werden. Ist eines oder sind mehrere Sendemodule vorgesehen, kann eines oder können mehrere Empfangsmodule vorgesehen sein, das oder die dann etwa an einer mit einer erfindungsgemäßen Werkzeuganordnung ausgestatteten Landmaschine und/oder einem eine solche insbesondere ziehenden Traktor angeordnet sein.

Auch bei bewegten Teilen ist jedoch eine Verkabelung möglich. Je nach Ausgestaltung können beispielsweise Schleifkontakte zur Verbindung etwa eines Sensoreinrichtung mit einer insbesondere zentralen Auswerte- und/oder Steuereinrichtung und/oder Stromquelle vorgesehen sein.

Die erfindungsgemäße Werkzeuganordnung kann ferner wenigstens ein elektrisches Anschlusselement, insbesondere wenigstens ein Stecker und/oder wenigstens eine Buchse aufweisen. Hierüber ist dann insbesondere eine Verbindung mit einer Einrichtung einer mit der Werkzeuganordnung ausgestatteten Landmaschine möglich. Wenigstens ein Anschlusselement kann der Herstellung einer Verbindung dienen, wenn wenigstens eine Sensoreinrichtung über wenigstens ein Kabel etwa mit einer Steuer- und/oder Auswerteeinrichtung und/oder einer Stromquelle verbunden wird.

Neben einer oder mehreren Sensoreinrichtungen zur Erfassung einer Kraft und/oder eine die Kraft repräsentierenden Größe kann eine oder können mehrere weitere Sensoren zur Erfassung anderer Parameter an bzw. in der Werkzeuganordnung vorgesehen sein. Beispielsweise kann wenigstens ein Sensor zur Erfassung der Umgebungstemperatur und/oder wenigstens ein Sensor zur Erfassung des Luftdrucks und/oder wenigstens ein Sensor zur Erfassung einer Luft- und/oder Bodenfeuchte und/oder wenigstens ein Sensor zur Erfassung der Lage des Werkzeuganordnung bzw. einer Komponente dieser im Raum vorgesehen sein.

Ein weiterer Gegenstand der Erfindung ist eine Landmaschine, insbesondere Grünland- und/oder Bodenbearbeitungsmaschine, bevorzugt Mähmaschine, insbesondere Scheibenmäher, oder Mähdrescher oder Pflug oder Grubber oder Egge oder Fräse oder Häcksler oder Mulcher oder Ernte- oder Dünge- oder Sämaschine, umfassend wenigstens eine erfindungsgemäße Werkzeuganordnung.

In Weiterbildung weist die erfindungsgemäße Landmaschine wenigstens einen Träger auf, an dem wenigstens eine erfindungsgemäße Werkzeuganordnung fixiert ist, und weist der Träger bevorzugt wenigstens einen elektrischen Anschluss auf, der zu einem an der wenigstens einen Werkzeuganordnung vorgesehenen elektrischen Anschluss korrespondierend ausgebildet und mit diesem verbindbar oder verbunden ist.

Eine weitere Ausführungsform der erfindungsgemäßen Landmaschine zeichnet sich dadurch aus, dass diese eine Steuereinrichtung aufweist, die mit wenigstens einer Sensoreinrichtung einer erfindungsgemäßen Werkzeuganordnung kabellos oder kabelgebunden verbunden und zum Empfangen von Signalen der wenigstens einen Sensoreinrichtung ausgebildet ist, wobei die Steuereinrichtung bevorzugt ausgebildet und eingerichtet ist, um in Reaktion auf den Empfang eines Signals von einer Sensoreinrichtung einer Werkzeuganordnung wenigstens eine Mitteilung an einen Benutzer der Landmaschine auszugeben. Die Mitteilung kann beispielsweise sein, dass wenigstens eine Komponente der Landmaschine, insbesondere einer erfindungsgemäßen Werkzeuganordnung, zu reparieren oder auszutauschen ist. Schließlich ist ein Gegenstand der Erfindung ein Verfahren zum Betreiben einer erfindungsgemäßen Landmaschine, bei dem vor und/oder während und/oder nach einer Boden- und/oder Grünlandbearbeitung mit der Landmaschine überwacht wird, ob wenigstens eine Sensoreinrichtung einer erfindungsgemäßen Werkzeuganordnung ein Signal ausgibt oder die Ausgabe eines Signals beendet und in Reaktion darauf bevorzugt wenigstens ein Werkzeug und/oder wenigstens eine weitere Komponente einer an der Landmaschine montierten Werkzeuganordnung repariert oder ausgewechselt wird.

Hinsichtlich der Ausgestaltungen der Erfindung wird auch auf die Unteransprüche sowie auf die nachfolgende Beschreibung eines Ausführungsbeispiels unter Bezugnahme auf die beiliegende Zeichnung verwiesen.

In der Zeichnung zeigt:
Figur 1 eine rein schematische, teilweise geschnittene Darstellung einer Ausführungsform einer erfindungsgemäßen Mähscheibenanordnung;
Figur 2 eine vergrößerte Darstellung des Bereiches um eine der beiden Klingen der Mähscheibenanordnung aus Figur 1;
Figur 3 eine vergrößerte Darstellung des Bereiches um eine Klinge einer weiteren Ausführungsform einer erfindungsgemäßen Mähscheibenanordnung; und
Figur 4 eine von einem Traktor gezogene Mähmaschine, die mit einer Mehrzahl von den in Figur 1 dargestellten Mähscheibenanordnungen ausgestattet ist.

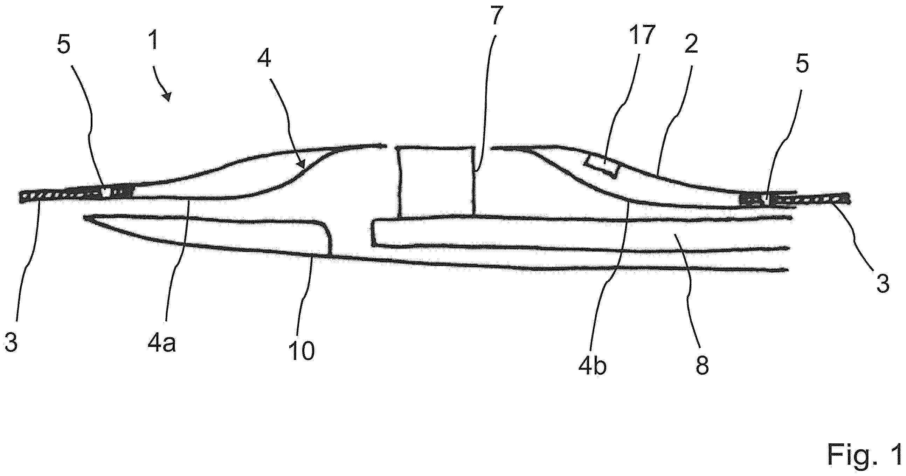

Die Figur 1 zeigt in rein schematischer, teilweise geschnittener Darstellung ein Ausführungsbeispiel einer erfindungsgemäßen Werkzeuganordnung zur Montage an einer Landmaschine, die vorliegend als Mähscheibenanordnung 1 ausgebildet ist.

Die Mähscheibenanordnung 1 umfasst eine Scheibe 2, , zwei Klingen 3 und einen federnden Klingenträger 4, der unterhalb der Scheibe 2 angeordnet und in einem radial relativ weit innen liegenden Bereich mit in der Figur 1 nicht dargestellten Schrauben an der Scheibe 2 festgeschraubt ist. Der Klingenträger 4 weist zwei federnde Arme 4a, 4b auf, von denen in der Figur 1 einer nach links und einer nach rechts weist. Jeder der beiden Arme 4a, 4b ist mit der Scheibe 2 verspannt. Es sei angemerkt, dass alternativ zu einem Klingenträger 4 mit zwei Armen 4a, 4b selbstverständlich auch zwei Klingenträger vorgesehen sein können, die insbesondere jeweils in ihrem einen Endbereich zentral an der Scheibe 2 festgeschraubt sind und von denen jeder eine Klinge 3 trägt.

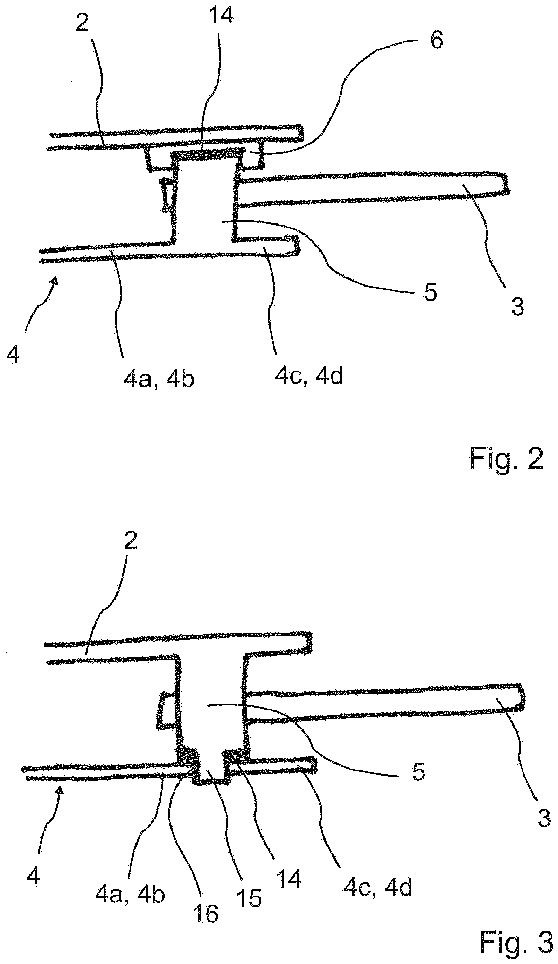

Dabei ist nahe des jeweiligen freien Endes 4c, 4d des jeweiligen Arms 4a, 4b ein Fixierbolzen 5 vorgesehen, der von dem jeweiligen Arm 4a, 4b nach oben in Richtung des Scheibe 2 abragt. Der Fixierbolzen 5 kann auch der vergrößerten Darstellung gemäß Figur 2 entnommen werden. Diese zeigt beispielhaft nur einen, konkret den in Figur 1 rechten Endbereich. Die Ausgestaltung an der gegenüberliegenden, in Figur 1 linken Seite ist identisch.

Das nach oben weisende, freie Ende des Fixierbolzens 5 drückt, wie man der Figur 2 entnehmen kann, gegen die Unterseite der Scheibe 2. Jeder der beiden Arme 4a, 4b des Klingenträgers 4 ist entsprechend mit der Scheibe 2 verspannt.

Für einen besonders guten Sitz des Fixierbolzens 5 ist bei dem dargestellten Ausführungsbeispiel an der Unterseite der Scheibe 2 ein Aufnahmeelement 6 mit einer an den Fixierbolzen 5 angepassten Aussparung vorgesehen, in welcher das freie Ende des Fixierbolzens 5 sitzt (vgl. Figur 2).

In jeder der beiden Klingen 3 ist eine Durchgangsbohrung, deren Innendurchmesser an den Außendurchmesser des zylinderförmigen Fixierbolzens 5 angepasst ist, vorgesehen und die Klingen 3 sind, wie in der Figur 2 zwei erkennbar, auf den jeweiligen Fixierbolzen 5 aufgesetzt.

Bei dem beschriebenen Ausführungsbeispiel können die jeweils auf einen Fixierbolzen 5 aufgesetzten Klingen 3 frei um diesen rotieren. So ist es insbesondere möglich, dass diese bei Kollision mit einem Hindernis ausweichen, insbesondere nach innen weggedreht werden. Dies ist darauf zurückzuführen, dass die Länge der Fixierbolzen 5 die Dicke der Klingen 3 überschreitet, so dass die Klingen 3 nicht zwischen Scheibe 2 und Klingenträger 4 bzw. dessen jeweiligem Arm 4a, 4b eingespannt sind.

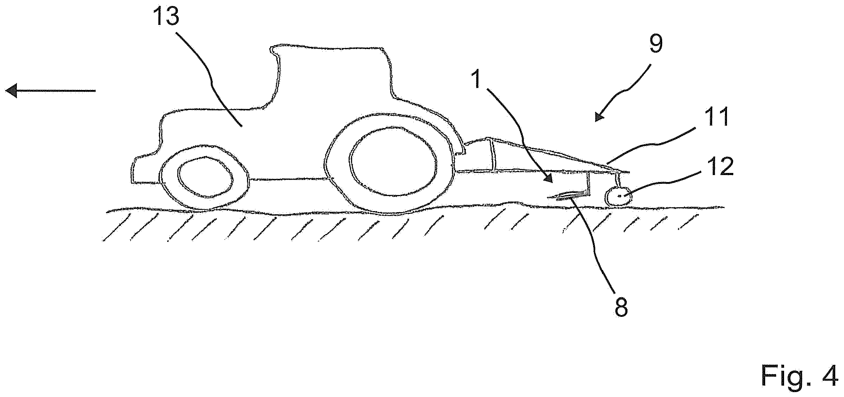

Die Scheibe 2 ist an einem Grundkörper, der vorliegend durch ein Gehäuse 7eines in der vereinfachten Figur 1 nicht weiter dargestellten Drehantriebs rotierend antreibbar gehalten. Der Antrieb ist an einem als Träger dienenden Balken 8 einer in der Figur 1 nicht weiter dargestellten, jedoch in der Figur 4 erkennbaren Mähmaschine 9 gehalten. Unterhalb des Balkens 8 ist in der Figur 1 noch eine Gleitkufe 10 dargestellt.

In der Landmaschine 9 sind an dem Balken 8 in einer Richtung orthogonal zur Zeichenebene von Figur 4 in an sich bekannter Weise mehrere erfindungsgemäße Mähscheibenanordnungen 1 mit jeweils zwei Klingen 3 gehalten. Unter jeder Mähscheibenanordnung 1 ist ferner jeweils eine Gleitkufe 10 vorgesehen, welche insbesondere vor Beschädigungen schützen soll. Der Balken 8 mit den Mähscheibenanordnungen 1 ist an einem Gestell 11 der Mähmaschine 9 befestigt. Für jede Mähscheibenanordnung 1 ist jeweils ein nicht dargestellter Antrieb vorgesehen, über den die Scheibe 2 im Betrieb rotiert wird.

Die Mähmaschine 9 umfasst weiterhin mehrere Räder 12, von denen in der Seitenansicht aus Figur 4 nur eines zu erkennen ist. Das Gestell 11 ist mit einem in der Figur 2 rein schematisch dargestellten Traktor 13 verbunden, und wird im Betrieb von diesem in einer in Figur 4 mit einem Pfeil angedeuteten Richtung gezogen. Während der Traktor 13 die Mähmaschine 9 zieht werden die Mähscheiben 2 in hinlänglich bekannter Weise rotiert, und mittels der an diesen gehaltenen Klingen 3 wird, beispielsweise Gras, gemäht.

Es sei angemerkt, dass es sich bei der hier beschriebenen Mähmaschine 9 um eine gezogene Maschine handelt, die mit einem Antriebsfahrzeug, hier einem Traktor 13 verbunden und von diesem zu ziehen ist. Natürlich ist es auch möglich, dass eine erfindungsgemäße Landmaschine alternativ dazu einen eigenen Antrieb aufweist. Auch ist möglich, dass alternativ zu der dargestellten Ausführungsform die Mähmaschine 9, bzw. zumindest der mit den Mähscheibenanordnungen 1 bestückte Balken 8 dieser seitlich und/oder vor einem insbesondere in Form eines Traktors 13 gegebenen Zugfahrzeugs angeordnet ist.

Die Mähscheibenanordnungen 1 gemäß Figur 1 können weitere Komponenten aufweisen. Rein beispielhaft sei in diesem Zusammenhang sowie im Zusammenhang mit einer beispielhaften Ausgestaltung und Positionierung der Fixierbolzen auf die aus der DE 195 21 076 A1 vorbekannte Mähscheibenanordnung verwiesen. Auch sei angemerkt, dass die Scheibe 2 verstärkte Abschnitte aufweisen und/oder mit Verstärkungselementen bestückt sein kann, dies insbesondere in denjenigen Bereichen, in denen die Klingen 3 gehalten sind und/oder sich Fixierbolzen 5 erstrecken. Verstärkungselemente können beispielsweise angeschraubt und/oder angeschweißt sein.

Da die Klingen 3 nur über die Fixierbolzen 5 und die mittels der federnden Klingenträger 4 beaufschlagte Spannkraft an den im Betrieb schnell rotierenden Scheiben 2 gehalten sind, ist ein besonders einfacher, schneller und komfortabler Klingenwechsel möglich. Hierzu muss lediglich eine zu wechselnde Klinge bzw. ein diese tragender Klingenträger 4 bzw. Arm 4a, 4b eines solchen von Hand und/oder mit Hilfe eines Hebels bzw. einer Stange bzw. eines passenden Werkzeugs nach unten gedrückt werden. Der entstehende Spalt bietet Raum, um die alte Klinge 3 durch einfaches abheben von dem Fixierbolzen herauszunehmen und eine neue einzusetzen. Sobald der federnde Klingenträger 4 wieder losgelassen wird, wird der Klingenträger 4 bzw. dessen jeweiliger Arm 4a, 4b wieder gegen die Scheibe 2 gedrückt und mit dieser verspannt.

Die Anmelderin hat festgestellt, dass den Vorteilen des sehr einfachen, schnellen und bequemen Klingenwechsels der erhebliche Nachteil gegenübersteht, dass es verschleiß- bzw. abnutzungsbedingt dazu kommen kann, dass sich Klingen 3 lösen, da die Spannkraft, welche von den Armen 4a, 4b des federnden Klingenträgers 4 beaufschlagt wird, mit der Zeit nachlässt, dies auch, wenn die Arme 4a, 4b mehrfach zum Erneuern der Klingen 3 heruntergedrückt werden. Lösen sich Klingen 3 im Betrieb, können diese sehr weit fliegen, womit ein erhebliches Sicherheitsrisiko verbunden ist.

Erfindungsgemäß ist daher jeder Klinge 3 der an den Mähscheibenanordnungen 1 der Scheibenmähers 9 eine Sensoreinrichtung in Form eine Drucksensors bzw. Druckaufnehmers 14 zugeordnet, welcher jeweils derart ausgebildet und angeordnet ist, dass mittels diesem ein durch den jeweiligen Klingenträger 4, konkret durch den jeweiligen Arm 4a, 4b dieses beaufschlagter Druck messtechnisch erfassbar ist.

Der jeweilige Drucksensor 14 ist zwischen dem jeweiligen Fixierbolzen 5 und dem an der Unterseite der Scheibe 2 vorgesehenen Aufnahmeelement 6 angeordnet, was in der Figur 2 erkennbar ist.

Eine alternative Ausgestaltung ist in Figur 3 gezeigt. Bei dieser ragen die Fixierbolzen 5 nicht von dem Klingenträger 4 nach oben in Richtung der Scheibe 2 ab, sondern von der Scheibe 2 nach unten in Richtung des Klingenträgers 4. In diesem Falle kann der Drucksensor 14 jeweils zwischen dem Fixierbolzen 5 und dem Klingenträger 4, konkret dem jeweiligen Arm 4a, 4b dieses angeordnet sein, wie in der Figur 3 erkennbar. Ein weiterer Unterschied der in Figur 3 dargestellten Ausführungsform gegenüber derjenigen aus Figur 2 besteht darin, dass keine Aufnahmeelemente 6 vorgesehen sind, sondern der Fixierbolzen 5 an seinem freien, in Richtung des Klingenträgers 4 weisenden Endes einen Fortsatz 15 geringeren Durchmessers aufweist, der in einer in dem jeweiligen Arm 4a, 4b des Klingenträgers 4 vorgesehen Durchgangsbohrung 16 sitzt.

Es sei betont, dass alternativ zu den in den Figuren 2 und 3 dargestellten beiden Montagepositionen für die Sensoreinrichtungen 14 noch weitere Montagepositionen denkbar sind. So kann eine Sensoreinrichtung 14 beispielsweise auch an einer radial weiter innenliegenden Position angeordnet sein und insbesondere oberseitig mit der Scheibe 2 und unterseitig mit dem jeweiligen federnden Klingenträger 4 in Kontakt stehen, wodurch ebenfalls eine beaufschlagte Kraft und/oder diese repräsentierende Größe überwacht werden kann.

Die beiden Sensoreinrichtungen 14 jeder Mähscheibenanordnung 1 der Mähmaschine 9 sind über in den Figuren nicht erkennbare Kabel mit einem an der jeweiligen Scheibe 2 gehaltenen Sendemodul 17 verbunden. Über das Sendemodul 17 werden mittels der Drucksensoren 14 erfasste Messwerte kabellos an ein beispielsweise in dem Traktor 13 vorgesehenes oder an dem Balken 8 gehaltenes, ebenfalls nicht dargestelltes zentrales Empfangsmodul, welches Bestandteil einer Auswerte- und/oder Steuereinrichtung sein kann, gesendet. Die Stromversorgung der Sensoreinrichtung erfolgt bei dem dargestellten Ausführungsbeispiel über Batterien. Alternativ zu der kabellosen Übertragung der Messsignale und/oder Stromversorgung über Batterien können auch Kabelverbindungen vorgesehen sein. In diesem Falle sind dann bevorzugt Schleifkontakte zumindest an der jeweiligen Scheibe 2 und/oder dem Gehäuse 5, an welchen diese rotierend antreibbar gehalten ist, vorgesehen.

Im Betrieb werden mit den Drucksensoren 14 kontinuierlich oder zu vorgegebenen Zeitpunkten Druck-Messwerte erfasst und an das Empfangsmodul gesendet und für den Fall, dass ein erfasster Wert einen vorgegebenen Grenzwert unterschreitet, wird ein Nutzer bzw. Betreiber der Mähmaschine 9 informiert und ihm wird bevorzugt eine Information gegeben, welcher Klingenträger 4 bzw. welche Klinge 3 betroffen ist. In Reaktion auf die Meldung wird der betroffenen Klingenträger 4 bevorzugt ausgetauscht und/oder repariert.

Durch die erfindungsgemäß vorgesehenen Sensoreinrichtungen 14 kann eine insbesondere verschließ- oder abnutzungsbedingte Abnahme der mittels Klingenträgern 4 beaufschlagten Spannkraft frühzeitig erkannt werden und Gegenmaßnahmen, insbesondere ein Austausch eines betroffenen Klingenträgers 4, können rechtzeitig getroffen werden. Ein ungewollter Klingenverlust kann zuverlässig vermieden werden und die Betriebssicherheit der Mähmaschine 9 wird im Ergebnis in ganz erheblichem Maße erhöht.

Es sei angemerkt, dass eine erfindungsgemäße Werkzeuganordnung alternativ zu dem vorstehend beschriebenen Ausführungsbeispiel auch durch eine anders gestaltete Werkzeuganordnung für den landwirtschaftlichen und/oder Grünland- und/oder Erntebereich gegeben sein kann. Rein beispielhaft sei eine Werkzeuganordnung für eine anders gestalteten Mähmaschine und/oder eine Werkzeuganordnung für eine Landmaschine genannt, die nicht zum Mähen sondern etwa für eine Bodenbearbeitung und/oder die Ernte zum Einsatz kommt.

### Bezugszeichenliste

- 1: Mähscheibenanordnung
- 2: Scheibe
- 3: Klinge
- 4: Klingenträger
- 4a: Arm
- 4b: Arm
- 4c: freies Ende
- 4d: freies Ende
- 5: Fixierbolzen
- 6: Träger
- 7: Grundkörper
- 8: Träger
- 9: Landmaschine
- 10: Gleitkufe
- 11: Gestell
- 12: Rad
- 13: Traktor
- 14: Sensoreinrichtung
- 15: Fortsatz
- 16: Durchgangsbohrung
- 17: Sendermodul

## Patentansprüche

1. Werkzeuganordnung (1) zur Montage an einer Landmaschine (7), insbesondere zur Grünland- und/oder Bodenbearbeitung und/oder zum Ernten, mit einem Werkzeug, das zwischen zwei miteinander verspannten Bauteilen (2, 4) der Werkzeuganordnung (1) gehalten ist, **dadurch gekennzeichnet, dass** dem wenigstens einen Werkzeug (3) eine Sensoreinrichtung (14) zugeordnet ist, die derart ausgebildet und angeordnet ist, dass mittels dieser eine Kraft, über die die beiden Bauteile (2, 4) verspannt sind, und/oder eine diese Kraft repräsentierende Größe messtechnisch erfassbar ist oder erfasst wird.

2. Anordnung (1) nach Anspruch 1, **dadurch gekennzeichnet, dass** mehrere Werkzeuge (3) vorgesehen und zwischen zwei miteinander verspannten Bauteilen (2, 4) der Werkzeuganordnung gehalten sind, und einem oder mehreren, insbesondere jedem Werkzeug (3) eine Sensoreinrichtung (12) zugeordnet ist, die insbesondere derart ausgebildet und angeordnet ist, dass mittels dieser eine Kraft, über die die zwei Bauteile (2, 4), zwischen denen das oder das jeweilige Werkzeug (3) gehalten ist, verspannt sind, und/oder eine diese Kraft repräsentierende Größe messtechnisch erfassbar ist oder erfasst wird.

3. Anordnung (1) nach Anspruch 1 oder 2, **dadurch gekennzeichnet, dass** die Anordnung einen Grundkörper (5) umfasst, an dem wenigstens zwei Bauteile (2, 4), zwischen denen wenigstens ein Werkzeug (3) gehalten ist, rotierend antreibbar gehalten sind, wobei die wenigstens zwei Bauteile (2, 4) bevorzugt an der Oberseite des Grundkörpers (7) rotierend antreibbar gehalten ist.

4. Anordnung (1) nach einem der vorhergehenden Ansprüche, **dadurch gekennzeichnet, dass** wenigstens ein Werkzeug als Klinge (3) ausgebildet ist.

5. Anordnung (1) nach einem der vorhergehenden Ansprüche, **dadurch gekennzeichnet, dass** die Werkzeuganordnung (1) als Mähscheibenanordnung (1), insbesondere für eine Mähmaschine (9), ausgebildet ist.

6. Anordnung (1) nach Anspruch 3, 4 und 5, **dadurch gekennzeichnet, dass** eine Scheibe (2) vorgesehen ist, die an dem Grundkörper (7) rotierend antreibbar gehalten ist, und wenigstens ein bevorzugt federnder Klingenträger (4) vorgesehen ist, der sich unterhalb der Scheibe (2) erstreckt, wobei der Klingenträger (4) zumindest abschnittsweise gegen die Scheibe (2) oder eine oder mehrere zwischen dem Klingenträger (4) und der Scheibe (2) liegende weitere Komponenten drückt, und wenigstens eine Klinge (3) zwischen der Scheibe (2) und dem Klingenträger (4) gehalten ist, wobei der wenigstens einen Klinge (3) eine Sensoreinrichtung (14) zugeordnet ist, die derart ausgebildet und angeordnet ist, dass mittels dieser eine durch den Klingenträger (4) beaufschlagte Kraft und/oder eine diese repräsentierende Größe messtechnisch erfassbar ist oder erfasst wird.

7. Anordnung (1) nach Anspruch 2 und 6, **dadurch gekennzeichnet, dass** der Klingenträger (4) zwei Arme (4a, 4b) aufweist, und zwischen jedem Arm (4a, 4b) und der Scheibe (2) jeweils eine Klinge (3) gehalten ist, wobei insbesondere jeder Klinge (3) eine Sensoreinrichtung (14) zugeordnet ist, die derart ausgebildet und angeordnet ist, dass mittels dieser eine Kraft, über die der jeweilige Arm (4a, 4b) mit der Scheibe (2) verspannt ist, erfassbar ist oder erfasst wird.

8. Anordnung (1) nach Anspruch 6 oder 7, **dadurch gekennzeichnet, dass** die oder jede Sensoreinrichtung (14) zwischen der Scheibe (2) und dem Klingenträger (4) angeordnet ist.

9. Anordnung (1) nach einem der Ansprüche 6 bis 8, **dadurch gekennzeichnet, dass** an dem oder jedem Klingenträger (4) und/oder der Scheibe (2) wenigstens ein Fixierbolzen (5) vorgesehen ist, und die oder jede Klinge (3) eine Durchgangsbohrung aufweist, deren Innenkontur insbesondere mit Spiel an die Außenkontur des wenigstens einen Fixierbolzens (5) angepasst ist.

10. Anordnung (1) nach Anspruch 8 und 9, **dadurch gekennzeichnet, dass** die oder jede Sensoreinrichtung (14) zwischen dem bzw. einem Fixierbolzen (5) und der Scheibe (2) oder zwischen dem bzw. einem Fixierbolzen (5) und dem Klingenträger (4) angeordnet ist.

11. Anordnung (1) nach einem der vorhergehenden Ansprüche, **dadurch gekennzeichnet, dass** die oder jede Sensoreinrichtung durch einen Drucksensor (14) gegeben ist oder einen solchen umfasst, und/oder dass an der Werkezuganordnung (1) wenigstens ein Sendemodul (17) zum kabellosen Senden von Signalen vorgesehen ist, das mit wenigstens einer einem Werkzeug (3) zugeordneten Sensoreinrichtung (14) verbunden ist, und/oder dass die Werkzeuganordnung (1) wenigstens ein elektrisches Anschlusselement, insbesondere wenigstens einen Stecker und/oder wenigstens eine Buchse, aufweist.

12. Landmaschine, insbesondere Grünland- und/oder Bodenbearbeitungsmaschine, bevorzugt Mähmaschine (9), insbesondere Scheibenmäher, oder Mähdrescher oder Pflug oder Grubber oder Egge oder Fräser oder Häcksler oder Mulcher oder Ernte- oder Dünge- oder Sämaschine, umfassend wenigstens eine Werkzeuganordnung (1) nach einem der vorhergehenden Ansprüche.

13. Landmaschine (7) nach Anspruch 12, **dadurch gekennzeichnet, dass** wenigstens ein Träger (8) vorgesehen ist, an dem wenigstens eine Werkzeuganordnung (1) nach einem der Ansprüche 1 bis 13 fixiert ist, und der Träger (8) bevorzugt wenigstens einen elektrischen Anschluss aufweist, der zu einem an der wenigstens einen Werkzeuganordnung (1) vorgesehenen elektrischen Anschluss korrespondierend ausgebildet und mit diesem verbindbar oder verbunden ist.

14. Landmaschine (9) nach Anspruch 12 oder 13, **dadurch gekennzeichnet, dass** die Landmaschine (9) eine Steuereinrichtung aufweist, die mit wenigstens einer einem Werkzeug (3) zugeordneten Sensoreinrichtung (14) einer Werkzeuganordnung (1) nach einem der Ansprüche 1 bis 13 kabellos oder kabelgebunden verbunden und zum Empfangen von Signalen der wenigstens einen Sensoreinrichtung (14) ausgebildet ist, wobei die Steuereinrichtung bevorzugt ausgebildet und eingerichtet ist, um in Reaktion auf den Empfang eines Signals von einer Sensoreinrichtung (14) einer Werkzeuganordnung (1) wenigstens eine Mitteilung an einen Benutzer der Landmaschine (9) auszugeben.

15. Verfahren zum Betreiben einer Landmaschine (9) nach einem der Ansprüche 12 bis 14, bei dem vor und/oder während und/oder nach einer Grünland- und/oder Bodenbearbeitung und/oder Ernte mit der Landmaschine (9) überwacht wird, ob wenigstens eine einem Werkzeug (3) zugeordnete Sensoreinrichtung (14) einer Werkzeuganordnung (1) nach einem der Ansprüche 1 bis 11 ein Signal ausgibt oder die Ausgabe eines Signals beendet, und in Reaktion darauf bevorzugt wenigstens ein Werkzeug (3) und/oder wenigstens eine weitere Komponente einer an der Landmaschine (9) montierten Werkzeuganordnung (1) repariert oder ausgewechselt wird.

## Claims

1. Tool arrangement (1) for mounting on an agricultural machine (7), in particular for grassland and/or soil cultivation and/or for harvesting, with a tool that is held between two components (2, 4) of the tool arrangement (1), which components (2, 4) are clamped together, **characterized in that** a sensor device (14) is associated with the at least one tool (3), which sensor device (14) is constructed and arranged in such a way that by means of the sensor device (14) a force, via which both the components (2, 4) are clamped together and/or a variable representing this force can be or is detected by measurement technology.

2. Arrangement (1) according to claim 1, **characterized in that** a plurality of tools (3) are provided and held between two components (2, 4) of the tool arrangement that are clamped together and a sensor device (12) is associated with one or more tools (3), in particular with each tool (3), which sensor device (12) in particular is constructed and arranged in such a way that by means of this sensor device (12) a force, via which the two components (2, 4) in between which the tool (3) or each tool (3) is held are clamped and/or a variable representing this force can be or is detected by measurement technology.

3. Arrangement (1) according to claim 1 or 2, **characterized in that** the arrangement comprises a base body (5), on which at least two components (2, 4) are held in a rotationally drivable manner, between which components (2, 4) at least one tool (3) is held, wherein the at least two components (2, 4) are preferably held in a rotationally drivable manner on the upper side of the base body (7).

4. Arrangement according to any of the preceding claims, **characterized in that** at least one tool is designed as a blade (3).

5. Arrangement (1) according to any of the preceding claims, **characterized in that** the tool arrangement (1) is designed as mowing disc arrangement (1), in particular for a mowing machine (9).

6. Arrangement (1) according to claims 3, 4 and 5, **characterized in that** a disc (2) is provided, which is held on the base body (7) in a rotationally drivable manner, and at least one preferably resilient blade carrier (4) is provided, which blade carrier (4) extends below the disc (2), in which the blade carrier (4) at least in sections presses against the disc (2) or one or more further components that lie between the blade carrier (4) and the disc (2), and at least one blade (3) is held between the disc (2) and the blade carrier (4), wherein a sensor device (14) is associated with the at least one blade (3), which sensor device (14) is designed and arranged in such a way that by means of it a force that is applied by the blade carrier (4) and/or a variable representing this force can be or is detected by measurement technology.

7. Arrangement (1) according to claims 2 and 6, **characterized in that** the blade carrier (4) has two arms (4a, 4b), and a respective blade (3) is held between each arm (4a, 4b) and the disc (2), wherein in particular a sensor device (14) is associated with each blade (3), which sensor device (14) is designed and arranged in such a way that by means of it a force via which the respective arm (4a, 4b) is clamped to the disc (2) can be or is detected.

8. Arrangement (1) according to claim 6 or 7, **characterized in that** the sensor device (14) or each sensor device (14) is arranged between the disc (2) and the blade carrier (4).

9. Arrangement (1) according to any of claims 6 to 8, **characterized in that** at least one fixing bolt (5) is provided on the blade carrier (4) or each blade carrier (4) and/or the disc (2), and the blade (3) or each blade (3) has a through-bore, the inner contour of which through-bore is adapted to the outer contour of the at least one fixing bolt (5), in particular with margin.

10. Arrangement (1) according to claims 8 and 9, **characterized in that** the sensor device (14) or each sensor device (14) is arranged between the or a fixing bolt (5) and the disc (2) or between the or a fixing bolt (5) and the blade carrier (4).

11. Arrangement (1) according to any of the preceding claims, **characterized in that** the sensor device or each sensor device is provided by or comprises a pressure sensor (14) and/or that at least one transmission module (17) for wirelessly transmitting signals is provided, which transmission module (17) is connected with at least one sensor device (14) that is allocated to a tool (3), and/or that the tool arrangement (1) comprises at least one electrical connection element, in particular at least one plug and/or at least one socket.

12. Agricultural machine, in particular a grassland and/or soil working machine, preferably a mowing machine (9), in particular a disc mower or combine harvester or plough or cultivator or harrow or cutter or chopper or mulcher, or harvesting or fertilizing or sewing machine, comprising at least one tool arrangement (1) according to one of the preceding claims.

13. Agricultural machine (7) according to claim 12, **characterized in that** at least one carrier (8) is provided, on which at least one tool arrangement (1) according to one of claims 1 to 13 is fixed, and the carrier (8) preferably comprises at least one electrical connection, which electrical connection is designed correspondingly to at least one electrical connector provided on the at least one tool arrangement (1) and is or can be connected to it.

14. Agricultural machine (9) according to claim 12 or 13, **characterized in that** the agricultural machine (9) has a control device, which is wirelessly or wire-bound connected to at least one sensor device (14) associated to a tool (3) of a tool arrangement (1) according to one of claims 1 to 13 and is designed for receiving signals from the at least one sensor device (14), wherein the control device preferably is designed and set up in order to output at least one message to the user of the agricultural machine (9) in reaction of receiving a signal from a sensor device (14) of a tool arrangement (1).

15. Method for operating an agricultural machine (9) according to any of claims 12 to 14, in which before and/or during and/or after a grassland and/or soil cultivation and/or harvest is monitored with the agricultural machine (9) whether at least one sensor device (14) of the tool arrangement (1) according to one of claims 1 to 11, which sensor device (14) is allocated to a tool (3), emits a signal or terminates the emission of a signal and in reaction thereto preferably one tool (3) and/or at least one further component of a tool arrangement (1) mounted to the agricultural machine (9) is repaired or exchanged.

## Revendications

1. Arrangement d'outil (1) destiné à être monté sur une machine agricole (7), en particulier pour le travail des prairies et/ou du sol et/ou pour la récolte, avec un outil qui est maintenu entre deux composants (2, 4) serrés l'un contre l'autre de l'arrangement d'outil (1), **caractérisé en ce qu'**un dispositif de détection (14) est associé à l'au moins un outil (3), lequel dispositif de détection (14) est conçu et disposé en particulier de telle manière que, au moyen de ce dispositif de détection (14), une force au moyen de laquelle les deux composants (2, 4) sont serrés l'un contre l'autre et/ou une variable représentante cette force peut être ou est détectée par mesure.

2. Arrangement (1) selon la revendication 1, **caractérisé en ce que** plusieurs outils (3) sont prévus et maintenus entre deux composants (2, 4) de l'arrangement d'outil qui sont serrés l'un contre l'autre, et un dispositif de détection (12) est associé à un ou plusieurs, en particulier à chaque outil (3), lequel dispositif de détection (12) est conçu et disposé en particulier de telle manière que, au moyen de ce dispositif de détection (12), une force au moyen de laquelle les deux composants (2, 4) entre lesquels le ou les outils (3) respectifs sont serrés et/ou une variable représentante cette force peut être ou est détectée par mesure.

3. Arrangement (1) selon la revendication 1 ou 2, **caractérisé en ce que** l'arrangement comprend un corps de base (5) sur lequel au moins deux composants (2, 4), entre lesquels est maintenu au moins un outil (3), sont maintenus de manière à pouvoir être entraînés en rotation, les au moins deux composants (2, 4) étant de préférence maintenus sur la face supérieure du corps de base (7) de manière à pouvoir être entraînés en rotation.

4. Arrangement (1) selon l'une des revendications précédentes, **caractérisé en ce qu'**au moins un outil est conçu comme une lame (3).

5. Arrangement (1) selon l'une des revendications précédentes, **caractérisé en ce que** l'arrangement d'outil (1) est conçu comme un arrangement de disques de fauchage (1), en particulier pour une faucheuse (9).

6. Arrangement (1) selon les revendications 3, 4 et 5, **caractérisé en ce qu'**il est prévu un disque (2) qui est maintenu sur le corps de base (7) de manière à pouvoir être entraîné en rotation, et au moins un porte-lame (4), de préférence élastique, qui s'étend sous le disque (2), le porte-lame (4) appuyant au moins partiellement sur le disque (2) ou sur un ou plusieurs autres composants situés entre le porte-lame (4) et le disque (2), et au moins une lame (3) est maintenue entre le disque (2) et le support de lame (4), un dispositif de détection (14) étant associé à la au moins une lame (3), lequel dispositif de détection (14) est conçu et disposé de telle sorte que, au moyen de ce dispositif de détection (14), une force appliquée par le support de lame (4) et/ou une variable représentante cette force peut être ou est détectée par mesure.

7. Arrangement (1) selon les revendications 2 et 6, **caractérisé en ce que** le support de lame (4) présente deux bras (4a, 4b), et une lame (3) respective est maintenue entre chaque bras (4a, 4b) et le disque (2), un dispositif de détection (14) étant en particulier associé à chaque lame (3) et étant conçu et disposé de telle sorte qu'au moyen de ce dispositif de détection (14), une force par laquelle le bras respectif (4a, 4b) est serré sur le disque (2) peut être ou est détectée.

8. Arrangement (1) selon la revendication 6 ou 7, **caractérisé en ce que** le ou chaque dispositif de détection (14) est disposé entre le disque (2) et le porte-lame (4).

9. Arrangement (1) selon l'une des revendications 6 à 8, **caractérisé en ce qu'**au moins un boulon de fixation (5) est prévu sur le ou chaque porte-lame (4) et/ou le disque (2), et la ou chaque lame (3) présente un alésage traversant dont le contour intérieur est adapté au contour extérieur du ou des boulons de fixation (5), en particulier avec du jeu.

10. Arrangement(1) selon les revendications 8 et 9, **caractérisé en ce que** le ou chaque dispositif de détection (14) est disposé entre le ou un boulon de fixation (5) et le disque (2) ou entre le ou un boulon de fixation (5) et le porte-lame (4).

11. Arrangement (1) selon l'une des revendications précédentes, **caractérisé en ce que** le ou chaque dispositif de détéction est prévu par ou comprend un capteur de pression (14), et/ou **en ce qu'**au moins un module de transmission (17) pour la transmission sans fil de signaux est prévu sur l'arrangement d'outil (1), lequel module de transmission est relié à au moins un dispositif de détéction (14) associé à un outil (3), et/ou **en ce que** l'arrangement d'outil (1) présente au moins un élément de connexion électrique, en particulier au moins un connecteur et/ou au moins une prise.

12. Machine agricole, en particulier machine de travail des prairies et/ou du sol, de préférence une faucheuse (9), en particulier une faucheuse à disques, ou une moissonneuse-batteuse ou une charrue ou un cultivateur ou une herse ou un coupeur ou un broyeur ou une machine de récolte ou de fertilisation ou de semis, comprenant au moins un arrangement d'outil (1) selon l'une des revendications précédentes.

13. Machine agricole (7) selon la revendication 12, **caractérisée en ce qu'**il est prévu au moins un support (8) sur lequel est fixé au moins un arrangement d'outil (1) selon l'une des revendications 1 à 11, et le support (8) présente de préférence au moins une connexion électrique qui est conçue pour correspondre à une connexion électrique prévue sur le au moins un arrangement d'outil (1) et peut être reliée ou est reliée à ce dernier.

14. Machine agricole (9) selon la revendication 12 ou 13, **caractérisée en ce que** la machine agricole (9) comprend un dispositif de commande qui est relié à au moins un dispositif de détection (14) d'un arrangement d'outil (1) selon l'une des revendications 1 à 11, sans fil ou par câble, et qui est conçu pour recevoir des signaux provenant du au moins un dispositif de détection (14), le dispositif de commande étant de préférence conçu et disposé pour délivrer au moins un message à un utilisateur de la machine agricole (9) en réponse à la réception d'un signal provenant d'un dispositif de détection (14) d'un arrangement d'outil (1).

15. Procédé pour faire fonctionner une machine agricole (9) selon l'une des revendications 12 à 14, dans lequel on surveille avant et/ou pendant et/ou après le travail des prairies et/ou du sol et/ou la récolte avec la machine agricole (9) si au moins un dispositif de détéction (14) d'un arrangement d'outil (1) selon l'une des revendications 1 à 11 associé à un outil (3) délivre un signal ou interrompt la délivrance d'un signal, et en réponse à cela, on répare ou on remplace de préférence au moins un outil (3) et/ou au moins un autre composant d'un arrangement d'outil (1) monté sur la machine agricole (9).
